# EUROPÄISCHE PATENTANMELDUNG

(11) **EP 3 744 760 A1**
(43) Veröffentlichungstag der Anmeldung: **02.12.2020**
(21) Anmeldenummer: 19176875.3
(22) Anmeldetag: 28.05.2019
(51) Int. Cl.: C08G 77/46, C08G 77/14

(54) **VERFAHREN ZUR HERSTELLUNG VON IM SILOXANTEIL VERZWEIGTEN SIOC-VERKNÜPFTEN POLYETHERSILOXANEN**

(71) Anmelder: Evonik Operations GmbH, 45128 Essen (DE)
(72) Erfinder: KNOTT, Wilfried, 45355 Essen (DE); DUDZIK, Horst, 45326 Essen (DE)
(74) Vertreter: Evonik Patent Association

(57) **Zusammenfassung**

Es wird ein Verfahren zur Herstellung von im Siloxanteil verzweigten, SiOC-verknüpften Polyethersiloxanen ausgehend von zyklischer- verzweigten Siloxanen vom D/T-Typ beschrieben, wobei man in einem ersten Schritt die Mischungen zyklischer-verzweigter Siloxane vom D/T-Typ gegebenenfalls in Abmischung mit einfachen Siloxanzyklen säurekatalysiert mit Acetanhydrid zu Acetoxygruppen-tragenden, verzweigten Siloxanen umsetzt, in einem zweiten Schritt die Äquilibrierung des Acetoxy-modifizierten verzweigten Siloxans mit Supersäure vorzugsweise unter Zusatz von Essigsäure durchführt und in einem dritten Schritt das supersaure Acetoxysiloxan gegebenenfalls in Gegenwart von Basen und gegebenenfalls in Gegenwart eines inerten Lösungsmittels mit Polyetherolen umsetzt.

## Beschreibung

Der Erfindung betrifft ein Verfahren zur Herstellung von im Siloxanteil verzweigten SiOC-verknüpften Polyethersiloxanen. Weiter betrifft die Erfindung auch Zubereitungen bestehend aus einem SiOC-verknüpften verzweigten Siliconpolyether nebst einem Polyetherol und einem durch Acetylgruppen endverschlossenen Polyetherol. Ferner betrifft die Erfindung die Verwendung dieser im Siloxanteil verzweigten SiOC-verknüpften Polyethersiloxane als Entschäumer, als Schaumstabilisatoren, Netzmittel, Lack- und Verlaufsadditive sowie als Dismulgatoren.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Ältere Verfahren zur Herstellung von verzweigten SiOC-verknüpften Polyethersiloxanen beruhen im Wesentlichen auf der Chlorsilanchemie (Methyltrichlorsilan und Dimethyldichlorsilan) und sehen die Anbindung der Polyethersubstituenten durch die Umsetzung der SiCl-Gruppen tragenden Siloxane mit dem jeweiligen Polyetherol in Gegenwart geeigneter Hilfsbasen vor, um die bei der Verknüpfungsreaktion freiwerdende Salzsäure in Form von Salzen zu binden. Sind die direkt der Müller-Rochow-Synthese (Direktsynthese) entstammenden, einfachen Chlorsilane auch günstig, so werfen die Lagerung und Handhabung dieser ätzend-korrosiven Edukte im Produktionsmaßstab etliche Probleme auf wie zum Beispiel Fragen nach Materialbeständigkeiten, Abgas-, Abfallthematiken, etc., was derartige Alt-Prozesse aus heutiger Sicht zunehmend unattraktiv macht.

Die europäischen Patentanmeldungen EP3321304A1 und EP3401353A1 zielen auf Mischungen zyklischer-verzweigter Siloxane vom D/T-Typ ab und lehren deren Weiterverarbeitung zu funktionalisierten verzweigten Siloxanen und/ oder verzweigten Siliconölen. Die darin offenbarte Weiterverarbeitung erfolgt durch saure Äquilibrierung der D/T-strukturierten Siloxane mit Silanen und/oder Siloxanen.

Hiernach sind im Siloxanteil verzweigte SiOC-verknüpfte Polyethersiloxane beispielsweise so zugänglich, indem man Mischungen zyklischer-verzweigter Siloxane vom D/T-Typ mit Diethoxydimethylsilan äquilibriert und dann im Sinne einer Umesterung zum Beispiel den metallkatalysierten Austausch der Ethoxy-Substituenten durch Polyalkylenoxy-Reste vornimmt.

Allerdings ist Diethoxydimethylsilan ein kostspieliges Modifizierungsagenz, was dessen breiten Einsatz einschränkt.

Konkret besteht somit die zu lösende technische Aufgabe darin, ein einfaches und zugleich wirtschaftliches Verfahren zu finden, das die Herstellung von im Siloxanteil verzweigten SiOC-verknüpften Polyethersiloxanen gestattet.

Zudem sollen dem Nachhaltigkeitsaspekt geschuldet bei der erfindungsgemäß zu lösenden Syntheseaufgabe Edukte wie Chlorsilane/ Chlorsiloxane sowie Zwischenprodukte wie die mineralsauren Alkylhalogenosiloxane, zum Beispiel die altbekannten Chlorsiloxanylsulfate, bewusst vermieden werden.

Außerdem sollten die im Siloxanteil verzweigten SiOC-verknüpften Polyethersiloxane über eine gute anwendungstechnische Qualität verfügen.

An ihren Dialkylsiloxy-Termini Acyloxy- respektive Acetoxygruppen tragende, verzweigte und unverzweigte Siloxane sind bereits aus der US 3595885 bekannt, worin deren Herstellung ausgehend von terminal mit Halogen-substituierten Siloxanen durch Umsetzung mit ein- und/ oder mehrbasigen Carbonsäuren, den Salzen entsprechender Carbonsäuren oder den Anhydriden solcher Carbonsäuren beschrieben wird. Insbesondere führt der Einsatz von Carbonsäuren und deren Anhydriden bei den dort betrachteten, äquilibrierten Systeme stets zur Präsenz der in die Siloxangerüste eingebauten Schwefelsäure in Form verbrückender Sulfatogruppen, was sich aus der bevorzugten Verwendung der dort als Edukt eingesetzten Chlorsiloxanylsulfate erklärt. Wie dem Fachmann bekannt, sind sulfatoverbrückte Siloxane allerdings reaktive Spezies die zum Beispiel bei ihrer Lagerung und abhängig von Temperatur und eventuell ins System gelangender Feuchtigkeit unter Freisetzung von Schwefelsäure unerwünschte Folgereaktionen eingehen können.

Ebenfalls ist aus etlichen Publikationen und Schutzrechtsersuchen die nicht äquilibrierende Öffnung einfacher unverzweigter Siloxanzyklen mit Acetanhydrid zu kurzkettigen, kettenterminale Acetoxygruppen tragenden Siloxanen in Gegenwart von Katalysatoren bekannt.

So beschreiben Borisov und Sviridova die Öffnung zyklischer Dimethylsiloxane mit Acetanhydrid in Gegenwart katalytischer Mengen Eisen(III)chlorid zu kurzkettigen α,ω-Acetoxysitoxanen (S. N. Borisov, N. G.Sviridova, J. Organomet. Chem. 11 (1968), 27-33). Lewis et al. widmet sich in der US 4066680 der Herstellung kurzkettiger α,ω-Siloxandiole, wobei er Octamethylcyclotetrasiloxan mit Acetanhydrid an säurebehandelten Bleicherden umsetzt und die so erhaltenen Mischungen kurzkettiger α,ω-Acetoxysiloxane in alkalisch eingestelltem Wasser hydrolysiert.

Aus US 3346610 ist gleichfalls ist ein Zugang zu Acetoxygruppen tragenden, kurzkettigen Siloxanen bekannt, der auf der Metallhalogenid induzierten Acetoxy-Modifizierung gespannter cyclischer Siloxane beruht, indem man diese mit Acetoxygruppen enthaltenden Silikonverbindungen zur Umsetzung bringt. Eine Vielzahl Friedel-Crafts-aktiver Metallhalogenide fungiert hier als Katalysator, wobei Zinkchlorid als bevorzugt ausgelobt wird. Eine spezielle Zielsetzung der US 3346610 liegt in der Acetoxy-Modifizierung gespannter Diorganosiloxancyclen unter bewusster Vermeidung von Äquilibriervorgängen.

Der Stand der Technik bezieht sich somit auf Arbeiten, die die Öffnung cyclischer Siloxane - hierbei manchmal gespannter Cyclosiloxane - mit Acyloxygruppen enthaltenden Reaktanden vorsehen und deren Zielsetzung es ist, definierte lineare kurzkettige und das auf dem Wege der fraktionierten Destillation noch zu separierende Siloxanspezies zu gewinnen.

Jedoch sind die auf diesem Wege synthetisierten, Molmassen-definierten, kettenreinen Acetoxy-modifizierten Siloxanverbindungen nicht geeignet für die Herstellung von organomodifizierten Siloxanen insbesondere Polyethersiloxanen, die Eingang in anspruchsvolle technische Anwendungen wie z.B. in die PU-Schaumstabilisierung oder in die Entschäumung von Kraftstoffen, etc. nehmen. Wirkstoffe, die ein derartiges Anwendungsgebiet effektiv adressieren, sind stets von einer breiten Oligomerverteilung umfassend hohe, mittlere und niedrige Molmassen gekennzeichnet, da den darin enthaltenen Oligomeren in Abhängigkeit von ihrer Molmasse und damit ihres Diffusionsverhaltens sehr oft differenzierte tensidische Aufgaben in unterschiedlichen Zeitfenstern des jeweiligen Prozesses zuzuschreiben sind. Speziell im Falle der verzweigten organomodifizierten Siloxane sind dem eingangs diskutierten Reaktivitätsverhalten von M-, D- und T-Einheiten geschuldet eine gute Oligomerverteilung kombiniert mit einer möglichst statistischen Gleichverteilung von Siloxaneinheiten in den individuellen Molekülen jedoch nur dann zu erzielen, wenn das eingesetzte Startmaterial vom D/T-Typ bereits selbst einer Verteilungsfunktion genügt.

Acyloxyorganopolysiloxane und hierbei insbesondere Organosiloxane mit endständigen Acyloxygruppen sind als Ausgangsmaterialien für Folgereaktionen bekannt. So können beispielsweise die Acyloxygruppen in einem Diorganosiloxan hydrolysiert werden, worauf das Hydrolysat dehydratisiert und das dehydratisierte Hydrolysat unter Bildung von fließfähigem Diorganopolysiloxan polymerisiert werden kann. Diese fließfähigen Polysiloxane eignen sich als Ausgangsmaterialien für die Herstellung viskoser Öle und Kautschuke, die zu Silikonelastomeren gehärtet werden können.

Mit endständigen Acyloxygruppen versehene Organosiloxane können beispielsweise durch Umsetzung eines Alkylsiloxans und einer organischen Säure und/oder deren Anhydrid in Gegenwart von Schwefelsäure als Katalysator erhalten werden. Ein solches Verfahren ist in der US-Patentschrift 2910496 (Bailey et al.) beschrieben. Obwohl man nach diesem Verfahren prinzipiell auch Organosiloxane mit endständigen Acyloxygruppen erhält, so haftet dem Prozess der Nachteil an, dass das Reaktionsprodukt aus einer Mischung von acyloxyhaltigen Siloxanen und Acyloxygruppen tragenden Silanen unterschiedlicher Zusammensetzung besteht. Insbesondere führt die Lehre hierzu aus, dass aus M-, D- und T-Einheiten zusammengesetzte Alkylsiloxancopolymere durch das Verfahren in Trimethylacyloxysilan, Di-Acyloxydimethylsiloxan und Methyltriacyloxysilan gespalten werden. Somit erhält Bailey bei der Umsetzung von Octamethylcyclotetrasiloxan mit Essigsäureanhydrid und Essigsäure nach Neutralisation der als Katalysator eingesetzten Schwefelsäure, Abtrennen der Salze und Abziehen von Wasser, restlicher Essigsäure und Acetanhydrids ein komplexes Stoffgemisch und keinesfalls ein Äquilibrat, das er dann der fraktionierten Destillation unterwirft (siehe Beispiel, ibid.). Die stoffliche Identität der dabei erhaltenen Fraktionen II und IV bleibt unklar, so dass es hiernach schwierig ist, definierte Produkte zu erhalten, beziehungsweise diese in hohen Ausbeuten vom Gemisch abzutrennen.

Sich auf Bailey et al. (US 2910496) beziehend, lehrt die DE 1545110 (A1) (Omietanski et al.) ein Verfahren, bei dem eine Acyloxygruppe eines Acyloxysiloxans mit der Hydroxylgruppe eines Polyoxyalkylenhydroxypolymers unter Bildung eines Siloxan-oxyalkylen-Blockmischpolymers und einer Carbonsäure umgesetzt wird, wobei die Carbonsäure aus dem Reaktionsgemisch entfernt wird. Die dort beschriebenen, lösemittelfrei geführten Umsetzungen verlangen zum Teil beträchtliche Reaktionszeiten (bis zu 11,5 Stunden (Beispiel 1), sehr hohe Umsetzungstemperaturen (150 bis 160°C (Beispiel 1) und das Anlegen eines Hilfsvakuums beziehungsweise das Strippen der Reaktionsmatrix mit trockenem Stickstoff über die gesamte Reaktionsdauer.

Überraschenderweise wurde nun gefunden, das man im Siloxanteil verzweigte SiOC-verknüpfte Polyethersiloxane ausgehend von zyklischen-verzweigten Siloxanen vom D/T-Typ herstellen kann, indem man
in einem ersten Schritt zyklische-verzweigte Siloxane vom D/T-Typ säurekatalysiert mit Acetanhydrid gegebenenfalls in Abmischung mit einfachen Siloxanzyklen und/ oder Hydroxygruppen tragenden Siloxanen und/oder Acetoxy- und/oder Alkoxygruppen-tragenden Silanen und/oder Siloxanen zu Acetoxygruppen-tragenden, verzweigten Siloxanen umsetzt und
in einem zweiten Schritt die Äquilibrierung des Acetoxy-modifizierten verzweigten Siloxans mit Säuren, vorzugsweise Supersäuren, insbesondere unter Zusatz von Essigsäure durchführt und
in einem dritten Schritt das saure Acetoxysiloxan gegebenenfalls in Gegenwart von Basen und gegebenenfalls in Gegenwart eines inerten Lösungsmittels mit Polyetherolen umsetzt,
wobei es sich bei den eingesetzten zyklischen-verzweigten Siloxanen vom D/T-Typ um Mischungen zyklischer-verzweigter Siloxane vom D/T-Typ handelt, die neben D- und T-Einheiten aufweisenden Siloxanen ggf. auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massenprozent-% ausmacht, bevorzugt ≤ 5 Massen-% bis ≥ 0 Massenprozent-%, wobei die Untergrenze > 0 oder = 0 Massenprozent-% sein kann, insbesondere aber = 0 Massenprozent-% ist, jeweils bezogen auf die Gesamtheit aller Si-Atome,
insbesondere mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 eingesetzte Säure(n) nicht allein Trifluormethansulfonsäure oder nicht allein Trifluormethansulfonsäure und Essigsäure sind.

Im ersten Schritt bevorzugt einsetzbare zyklisch-verzweigten Siloxane vom D/T-Typ sind sowohl im experimentellen Teil beispielhaft beschrieben als auch z.B. in den offengelegten Patentanmeldungen EP 3321304 A1, EP 3401353 A1 sehr detailliert beschrieben. Beide EP-Schriften gehören somit vollumfänglich zum Offenbarungsgehalt dieser Anmeldung. Die Bereitstellung von Mischungen zyklischer-verzweigter Siloxane vom D/T-Typ, die neben D- und T-Einheiten aufweisenden Siloxanen auch solche mit Q-Einheiten enthalten, ist dem Fachmann beispielsweise in Analogie zur Lehre der beiden genannten Schriften unter Verwendung von zum Beispiel Q-Einheiten liefernden Kieselsäuresteern (Si(OR)₄) ohne Weiteres möglich.

Gemäß einer bevorzugten Ausführungsform der Erfindung sind die in Schritt 1 und/oder 2 eingesetzten Säuren Supersäuren. Supersäuren sind dem Fachmann wohlbekannt, es handelt sich hierbei im Allgemeinen um Säuren, die stärker als konzentrierte 100-prozentige Schwefelsäure (H₂SO₄: pKₛ-Wert = -3,0) sind. Zur Quantifizierung der Säurestärke wird im Allgemeinen die Hammettsche Aciditätsfunktion verwendet.

Gemäß einer weiteren bevorzugten Ausführungsform der Erfindung sind die in Schritt 1 und/oder 2 eingesetzten Säuren demnach Supersäuren, die einen pKa-Wert kleiner -3,0 aufweisen, vorzugsweise fluorierte und/ oder perfluorierte Sulfonsäuren, Fluorsulfonsäure HSO₃F, Fluor-Antimonsäure HSbF₆, Perfluorbutansulfonsäure C₄F₉SO₃H und ganz besonders bevorzugt Trifluormethansulfonsäure CF₃SO₃H umfasst, insbesondere mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 des erfindungsgemäßen Verfahrens eingesetzte Säure(n) nicht allein Trifluormethansulfonsäure oder nicht allein Trifluormethansulfonsäure und Essigsäure sind.

Gemäß einer bevorzugten Ausführungsform der Erfindung werden in Schritt 1 Acetoxygruppen tragende Silane eingesetzt, insbesondere Diacetoxydimethylsilan und/oder Triacetoxymethylsilan.

Gemäß einer weiteren bevorzugten Ausführungsform der Erfindung werden in Schritt 1 Alkoxygruppen tragende Silane eingesetzt, insbesondere Triethoxy- und/ oder Trimethoxy- und/ oder Diethoxy- und/ oder Triethoxysilan und / oder Kieselsäureester (Si(OR)₄), bevorzugt mit R = Methyl oder Ethyl.

Gemäß einer weiteren bevorzugten Ausführungsform der Erfindung werden in Schritt 1 Mischungen zyklischer-verzweigter Siloxane vom D/T-Typ eingesetzt, die D- und T-Einheiten aufweisende Siloxanen umfassen, mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und dass sie des Weiteren zumindest 5 Gew.-% Siloxancyclen, wie vorzugsweise Oktamethylcyclotetrasiloxan (D4), Dekamethylcyclopentasiloxan (D₅) und/oder deren Mischungen enthalten.

Gemäß einer weiteren bevorzugten Ausführungsform der Erfindung werden in Schritt 1 Mischungen zyklischer-verzweigter Siloxane vom D/T-Typ eingesetzt, die D- und T-Einheiten aufweisende Siloxane umfassen, mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, größer 2 Molprozent und kleiner 10 Molprozent ist.

Der Begriff des inerten Lösungsmittels umfasst all jene Lösungsmittel, welche unter den Bedingungen der hier ausgeführten Reaktion mit potentiellen Reaktionspartnern nicht oder allenfalls in verschwindend geringem Maße reagieren. Insbesondere ist das inerte Lösungsmittel ein aromatisches, bevorzugt alkylaromatisches Lösungsmittel und ganz besonders bevorzugt Toluol.

Die im Acetylierungsschritt gegebenenfalls noch hinzugefügten, einfachen Siloxanzyklen umfassen insbesondere Oktamethylcyclotetrasiloxan, Dekamethylcyclopentasiloxan, Dodekamethylcyclohexasiloxan und/ oder deren beliebig zusammengesetzte Abmischungen, was einer bevorzugten Ausführungsform der Erfindung entspricht.

Die Beobachtung, dass sich auch diejenigen Mischungen der D- und T-Einheiten aufweisenden Siloxane zur erfindungsgemäßen Weiterverarbeitung eignen, die einen erhöhten Gehalt an Si-Alkoxy- und/oder SiOH-Gruppen aufweisen, ist für den Fachmann auch eingedenk der in der europäischen Patentanmeldung EP3401353A1 und in der EP 3467006 A1 beschriebenen Schwierigkeiten bei deren Äquilibrierung nicht vorhersehbar.

So wird im Rahmen der hier vorliegenden Erfindung im experimentellen Teil neben der erfindungsgemäßen Verwendung eines zyklisch-verzweigten Siloxans mit einem angestrebten D-/ T-Verhältnis von 6 : 1 und einem Gehalt an spektroskopisch erfassten Si-Einheiten, die Si-Alkoxy- beziehungsweise SiOH-Gruppen aufweisen von 0,43 Molprozent (Beispiele 2, 3, 4 und 5) ebenfalls die erfindungsgemäße Verwendung eines zyklisch-verzweigten Siloxans mit einem angestrebten D-/ T-Verhältnis von 6 : 1 und einem Gehalt an spektroskopisch erfassten Si-Einheiten, die Si-Alkoxy- beziehungsweise SiOH-Gruppen aufweisen von 4,0 Molprozent gezeigt. (Beispiele 7 und 8).

Da die erfindungsgemäß resultierenden, im Siloxanteil verzweigten SiOC-verknüpften Polyethersiloxane sich von äquilibrierten Siloxanoligomeren herleiten, ist die anwendungstechnische Qualität sichergestellt.

Die Herstellung eines einfach verzweigten, Acetoxygruppen tragenden Siloxangerüstes durch Substitution Silicium-gebundenen Chlors durch Essigsäure sowie der mit Salzanfall verbundene Austausch von Acetoxygruppen, durch Polyetheroxyreste, sind in der US 4380451, ibid. Example 1 beschrieben. Hierbei wird unter starkem Rühren das Acetoxygruppen tragende Siloxan in Toluol vorgelegt und man lässt eine Mischung eines Butanol-gestarteten Polyetherols in Toluol binnen 15 Minuten zulaufen, um dann binnen 45 Minuten Ammoniak einzuleiten. Man erhitzt die Reaktionsmischung dann auf 80°C, fügt eine kleine Menge Isopropanol hinzu und sättigt die Matrix im Verlauf von 3 Stunden weiter mit Ammoniak. Nach Abkühlen auf Raumtemperatur trennt man die Salze durch Filtration ab, und destilliert das Toluol bei 100°C und einem Hilfsvakuum von 20 mbar.

Dieser auf Chlorsilanen beruhende und mit erheblichem Salzanfall verbundene Syntheseweg ist allerdings unter den Gesichtspunkten betrieblicher Herstellung nachteilig, da man einen erheblichen Aufwand für die Filtration sowie damit einhergehenden Produktverlusten akzeptieren muss.

Überraschenderweise wurde im Rahmen dieser Erfindung jedoch weiterhin festgestellt, dass sich der Austausch Acetoxy- vs. Polyetheroxy-Rest an Siloxanen auch ohne den Einsatz einer zur Neutralisation freigesetzter Essigsäure ausreichenden Menge an zugefügter Hilfsbase, wie zum Beispiel Ammoniak, erfolgreich und quantitativ durchführen lässt (Beispiele 3 und 4).

Somit ist ein weiterer Gegenstand und eine weitere bevorzugte Ausführungsform dieser Erfindung der salzfreie Austausch von Acetoxygruppen, die an verzweigte Siloxangerüste gebunden sind, durch Polyetheroxyreste, indem man das saure, vorzugsweise supersaure, insbesondere trifluormethansulfonsaure Acetoxygruppen tragende, verzweigte Siloxan gegebenenfalls in Gegenwart von Basen in einem Lösungsmittel zusammen mit dem Polyetherol unter Rühren zur Reaktion bringt und dann im Rahmen einer Destillation die entstandene und gegebenenfalls im System bereits vorhandene Essigsäure und Reste eingesetzten Acetanhydrids gegebenenfalls zusammen mit Anteilen des eingesetzten Lösungsmittels entfernt. Dies entspricht einer bevorzugten Ausführungsform der Erfindung zum Austausch der Siloxan gebundenen Acetoxygruppen durch die Umsetzung mit Polyetherolen,
insbesondere mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 des erfindungsgemäßen Verfahrens eingesetzte Säure(n) nicht allein Trifluormethansulfonsäure oder nicht allein Trifluormethansulfonsäure und Essigsäure sind.

Bevorzugt sind dabei solche Lösungsmittel, die im Sinne der angestrebten Substitutionsreaktion (Austausch Acetoxy- vs. Polyetheroxy-Rest) inert sind und in bevorzugter Weise mit der entstehenden und der gegebenenfalls im System bereits vorhandenen Essigsäure ein thermisch abtrennbares Azeotrop bilden. Dies entspricht einer weiteren bevorzugten Ausführungsform der Erfindung, wobei der Einsatz eines aromatischen, vorzugsweise alkylaromatischen Lösungsmittels bevorzugt ist.

Unter den mit Essigsäure binäre Azeotrope bildenden Lösungsmitteln ist Toluol ganz besonders bevorzugt. Der Einsatz von Toluol entspricht daher einer bevorzugten Ausführungsform der Erfindung. Die Siedepunkte von Toluol und Essigsäure sind mit 110,6 bzw. 118,5°C und der Siedepunkt des binären Azeotrops mit 105,4°C angegeben. Das Azeotrop besitzt eine Zusammensetzung von 72 Gew.-% Toluol und 28 Gew.-% Essigsäure (Quelle: Handbook of Chemistry and Physics, 58th Edition, Seite D2, CRC-Press (1977-1978), West Palm Beach).

Das mit der Azeotropbildung einhergehende, thermische Auskreisen der Essigsäure stellt den vollständigen Austausch der am Siloxangerüst gebundenen Acetoxyfunktionen gegen Polyetheroxyreste sicher und entspricht daher einer besonders bevorzugten Ausführungsform der Erfindung.

Ganz besonders bevorzugt ist hierbei außerdem das Anlegen eines Hilfsvakuums, da es die thermische Belastung des entstandenen SiOC-verknüpften, verzweigten Polyethersiloxans minimiert (Beispiele 3 und 5).

Wird die erfindungsgemäß nach dem zweiten Schritt anfallende Mischung enthaltend ein im Siloxanteil verzweigtes, Acetoxygruppen tragendes, äquilibriertes Siloxan neben gegebenenfalls nichtumgesetztem Acetanhydrid und der darin befindlichen Katalysatorsäure im dritten Schritt mit einem Polyetherol ohne Hinzufügen einer Base in der Wärme umgesetzt, so entstehen in Abhängigkeit von der gewählten Stöchiometrie der Reaktanden, der Temperatur und der Reaktionszeit, neben dem SiOC-verknüpften verzweigten Siliconpolyether auch wechselnde Anteile eines Acetylgruppen endverschlossenen Polyethers. Dies entspricht einer bevorzugten Ausführungsform der Erfindung.

Wird hingegen eine Hilfsbase wie zum Beispiel Natriumhydrogencarbonat in dem Polyetherol vorgelegt und dieses sodann mit der aus dem zweiten Schritt stammenden Mischung enthaltend ein im Siloxanteil verzweigtes, Acetoxygruppen tragendes, äquilibriertes Siloxan neben nichtumgesetztem Acetanhydrid und der darin befindlichen Katalysatorsäure beaufschlagt, so führt die frühe Neutralisation der Säure dazu, dass man keine Veresterung des hydroxyfunktionellen Polyethers beobachtet (Beispiel 4). Dies entspricht einer bevorzugten Ausführungsform der Erfindung.

Erfindungsgemäß besonders bevorzugt erfolgt der Austausch der Siloxan gebundenen Acetoxygruppen in Gegenwart einer Base, insbesondere in Gegenwart von Natriumhydrogencarbonat, Ammoniak oder eines organischen Amins.

Nimmt man die Neutralisation der im Reaktionssystem vorhandenen Säure jedoch zu einem späteren Zeitpunkt - insbesondere nach der thermischen Abtrennung entstandener Essigsäure, restlichen Acetanhydrids und gegebenenfalls eingesetzten Lösungsmittels, vor, so wird das im System befindliche Polyetherol in geringen Anteilen mit Acetylendgruppen verschlossen. Die längere Einwirkdauer der im System vorhandenen Säure führt zudem erfahrungsgemäß häufig zu etwas stärker verfärbten Produkten (Beispiel 3).

In diesem Fall besteht nach destillativer Entfernung der Essigsäure die erfindungsgemäß erhaltene Zubereitung aus einem SiOC-verknüpften verzweigten Siliconpolyether nebst einem Polyetherol und einem Acetylgruppen endverschlossenen Polyetherol. Solche Zubereitungen mit reduzierter Hydroxyfunktionalität können in speziellen Anwendungen von Interesse sein und sind ebenfalls Gegenstand vorliegender Erfindung.

Dieses erfindungstypische Nebenprodukt lässt sich durch begleitende ¹³C-NMR- und ¹H-NMR-Spektroskopie erfassen, da insbesondere die Verschiebung des Polyether-veresterten Carboxylatkohlenstoffs mit δ ca. 171,5 ppm charakteristisch ist.

Erstaunlicherweise wurde jedoch auch gefunden, dass die lösemittelfreie Transformation saurer, vorzugsweise supersaurer, insbesondere trifluormethansulfonsaurer verzweigter, Acetoxyfunktionen aufweisender Siloxane zu im Siloxanteil verzweigten, SiOC-verknüpften Polyethersiloxanen sehr zügig ( innerhalb 1 Stunde) und überdies bei sehr moderaten Temperaturen (T = 50°C) quantitativ gelingt (Beispiel 4).

Wenn der Austausch der Siloxan gebundenen Acetoxygruppen durch die Umsetzung mit Polyetherolen lösemittelfrei erfolgt, so liegt folglich eine weitere bevorzugte Ausführungsform der Erfindung vor.

Somit ist ein weiterer Gegenstand und eine weitere bevorzugte Ausführungsform dieser Erfindung der salzfreie Austausch von an verzweigte Siloxangerüste gebundenen Acetoxyfunktionen durch Polyetheroxyreste, indem man das saure, vorzugsweise supersaure, insbesondere trifluormethansulfonsaure Acetoxygruppen tragende, verzweigte Siloxan zusammen mit dem Polyetherol unter Freisetzung von Essigsäure umsetzt,

insbesondere mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 des erfindungsgemäßen Verfahrens eingesetzte Säure(n) nicht allein Trifluormethansulfonsäure oder nicht allein Trifluormethansulfonsäure und Essigsäure sind.

Die Vorteile dieses erfindungsgemäßen, salzfreien Prozessschrittes sind für den Fachmann evident, da Filtrationsschritte bei Produktionsverfahren immer zeitintensiv, verlustbehaftet und zudem entsorgungsrelevant sind.

Im Rahmen der vorliegenden Erfindung wurde festgestellt, dass sich die Acetoxyfunktionalisierung der DT-Zyklen prinzipiell sowohl durch den Einsatz von Homogen- als auch Heterogensäuren katalysieren lässt. Ebenfalls wurde gefunden, dass sich sowohl Lewis-als auch Brönstedt-Säuren zu diesem Zwecke eignen. Insbesondere können Lewis-Supersäuren, wasserfreies Eisen(III)chlorid, Filtrol® (stark saure Bleicherde bzw. säurebehandelte Bleicherden), konzentrierte Schwefelsäure und besonders bevorzugt Trifluormethansulfonsäure zur Katalyse des Acetylierungsschrittes eingesetzt werden. Dies entspricht einer bevorzugten Ausführungsform der Erfindung, insbesondere mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 des erfindungsgemäßen Verfahrens eingesetzte Säure(n) nicht allein Trifluormethansulfonsäure oder nicht allein Trifluormethansulfonsäure und Essigsäure sind.

Lewis-Supersäuren sind an sich bekannt und werden in der Publikation von L. Greb , Chem. Eur. J. 2018, 24, 17881 - 17896 (2018), Wiley-VCH Verlag GmbH & Co. KGaA, Weinheim ausführlich beschrieben. Dieser Begriff der Lewis-Supersäuren wird im Rahmen der vorliegenden Erfindung übernommen. Insbesondere die in der genannten Publikation unter Punkt 7, S. 17886 bis 17890, bevorzugt unter den Unterpunkten 7.1. Gruppe 13, 7.2. Gruppe 14, 7.3. Gruppe 15 sowie 7.4. Gruppe 16, explizit aufgeführten Lewis-Supersäuren sind Lewis-Supersäuren im Sinne der vorliegenden Erfindung.

Hinsichtlich ihrer Wirksamkeit differenzieren sich die sauren Katalysatoren allerdings sehr.

Es wurde gefunden, dass bevorzugt Supersäure, insbesondere Trifluormethansulfonsäure nicht nur den Einbau von Acetoxyfunktionen in das verzweigte Siloxan erleichtert, sondern darüber hinaus auch die vollständige Äquilibrierung des so gewonnenen Acetoxygruppen tragenden, verzweigten Siloxans sicherstellt. Neben anderen analytischen Verfahren wie der Gel-Permeations-Chromatographie (GPC) ist zur praxistauglichen Bewertung der erzielten Äquilibrierqualität bereits ein einfacher Handtest geeignet, bei dem man auf einen schwarzen Bakelitdeckel ein Volumen von 0,2 bis 0,4 ml des zu prüfenden verzweigten, sauren, vorzugsweise supersauren, insbesondere trifluormethansulfonsauren Acetoxysiloxans aufbringt und an Luft härten lässt.

Vollständig durchäquilibrierte, verzweigte Acetoxysiloxane bilden sodann im Verlauf von weniger als 1 Minute ein festes, weißes Gel, dessen Präsenz sich gut vor dem Hintergrund des schwarzen Bakelitdeckels abhebt (Beispiel 2 und Beispiel 7). Unvollständig äquilibrierte, verzweigte Acetoxysiloxane hingegen liefern stets nur Proben mit partiellem Gelanteil und Restflüssigkeit.

Werden die aus der Acetoxyfunktionalisierung der DT-Zyklen hervorgehenden, verzweigten Acetoxysiloxane diesem empfindlichen Test unterworfen, so wird deutlich, dass wasserfreies Eisen(III)chlorid, Filtrol® (stark saure Bleicherde bzw. säurebehandelte Bleicherden) und konzentrierte Schwefelsäure zwar die Acetoxyfunktionalisierung katalysieren, jedoch nicht zu vollständig äquilibrierten, verzweigten Acetoxysiloxanen führen.

Man kann gewünschtenfalls die unvollständig äquilibrierten Acetoxysiloxane dann einer Äquilibrierung mit Supersäure, insbesondere Trifluormethansulfonsäure unterziehen.

Des Weiteren ist Supersäure, insbesondere Trifluormethansulfonsäure insofern besonders bevorzugt, als dass sie keine Tendenz zur Produktverfärbung wie Eisen(III)chlorid besitzt und auch nicht wie der saure Feststoff Filtrol® durch Filtration zwingend vom Zwischenprodukt abgetrennt werden muss.

Die Supersäure, vorzugsweise Trifluormethansulfonsäure soll vielmehr im Acetoxygruppen-tragenden, verzweigten Siloxanzwischenprodukt verbleiben (siehe erfindungsgemäßes Beispiel 1 und erfindungsgemäßes Beispiel 2).

Zur Einführung der Acetoxygruppen wird Supersäure (wie vorzugsweise Trifluormethansulfonsäure) bevorzugt in Konzentrationen von 0,05 bis 0,2 Gewichtsprozent (Gew.-%), besonders bevorzugt in Konzentrationen von 0,07 bis 0,15 Gewichtsprozent (Gew.-%) bezogen auf die Gesamtmasse des Reaktionsansatzes eingesetzt. Dies entspricht einer bevorzugten Ausführungsform der Erfindung, insbesondere mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 des erfindungsgemäßen Verfahrens eingesetzte Säure(n) nicht allein Trifluormethansulfonsäure oder nicht allein Trifluormethansulfonsäure und Essigsäure sind.

Die Erfinder haben weiter festgestellt, dass sich vollständig durchäquilibrierte, verzweigte Acetoxysiloxane sehr zügig und vorteilhaft herstellen lassen, wenn man die zyklisch-verzweigten Siloxane vom D/T-Typ Supersäure-katalysiert, vorzugsweise Trifluormethansulfonsäure-katalysiert, mit Acetanhydrid gegebenenfalls in Abmischung mit einfachen Siloxanzyklen unter Zusatz von Essigsäure zu Acetoxygruppen-tragenden, verzweigten Siloxanen umsetzt, was einer ganz besonders bevorzugten Ausführungsform der Erfindung entspricht, insbesondere mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 des erfindungsgemäßen Verfahrens eingesetzte Säure(n) nicht allein Trifluormethansulfonsäure oder nicht allein Trifluormethansulfonsäure und Essigsäure sind.

Bevorzugt wird Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix bestehend aus Acetanhydrid, zyklisch-verzweigten Siloxanen vom D/T-Typ und gegebenenfalls einfachen Siloxanzyklen hinzugesetzt, was einer ganz besonders bevorzugten Ausführungsform der Erfindung entspricht.

Im Rahmen einer breit angelegten Untersuchung haben die Erfinder festgestellt, dass der Essigsäure-Zusatz neben dem Erreichen der Acetoxyfunktionalisierung der Sicherstellung eines perfekten Äquilibrierergebnisses bereits nach sehr kurzer Reaktionszeit dient (siehe Beispiel 9). Neben dem zuvor beschriebenen Bakelitdeckeltest (Handtest) wird als Indikator für das Erreichen des Äquilibriergleichgewichtes der gaschromatographisch bestimmte Gesamtcyclengehalt definiert als die Summe der D₄-, D₅-, D₆-Gehalte bezogen auf die Siloxanmatrix und festgestellt nach der Derivatisierung der verzweigten Acetoxysiloxane zu den entsprechenden verzweigten Isopropoxysiloxanen herangezogen. Die Derivatisierung zu den verzweigten Isopropoxysiloxanen wird hierbei bewusst gewählt, um eine unter den Bedingungen der gaschromatographischen Analyse gegebenenfalls erfolgende, thermisch induzierte Rückspaltungsreaktion der verzweigten Acetoxysiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)). Erfindungsgemäß soll dieser Gesamtcyclengehalt vorzugsweise kleiner 8 Gewichtsprozent, bevorzugt kleiner 7 Gewichtsprozent an der aus verzweigten Isopropoxysiloxanen bestehenden Siloxanmatrix aufweisen.

Somit adressieren wasserfreies Eisen(III)chlorid, Filtrol® (stark saure Bleicherde) und konzentrierte Schwefelsäure als Katalysatoren nur den ersten Schritt des erfindungsgemäßen Verfahrens, während Supersäure, vorzugsweise Trifluormethansulfonsäure, als Katalysator den ersten und zweiten Schritt vorteilhafterweise zu einem Prozessschritt verdichtet, das heißt, sowohl die Acetylierung der zyklisch-verzweigten Siloxane vom D/T-Typ als auch die Äquilibrierung des Acetoxysiloxans katalysiert. Darüber hinausgehend kann die Supersäure, vorzugsweise Trifluormethansulfonsäure, wie erläutert, zur Nacharbeitung unvollständig äquilibrierter Acetoxysiloxane eingesetzt werden.

Es entspricht daher einer bevorzugten Ausführungsform der Erfindung, dass bei Einsatz der Supersäure, vorzugsweise Trifluormethansulfonsäure als Katalysator der erste Schritt des erfindungsgemäßen Verfahrens, also die säurekatalysierte Umsetzung von Mischungen zyklischer-verzweigter Siloxane vom D/T-Typ gegebenenfalls in Abmischung mit einfachen Siloxanzyklen mit Acetanhydrid und das bevorzugt unter Zusatz von Essigsäure zu Acetoxygruppen-tragenden, verzweigten Siloxanen, und der zweite Schritt, also die Äquilibrierung des Acetoxy-modifizierten verzweigten Siloxane, zu einem einzigen Prozessschritt verdichtet werden, insbesondere mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 des erfindungsgemäßen Verfahrens eingesetzte Säure(n) nicht allein Trifluormethansulfonsäure oder nicht allein Trifluormethansulfonsäure und Essigsäure sind.

Im abschließenden (also dritten) Schritt des erfindungsgemäßen Verfahrens wird der Austausch der Acetoxygruppen durch die Umsetzung des sauren, bevorzugt supersauren, vorzugsweise trifluormethansulfonsauren Acetoxysiloxans mit Polyetherolen vorgenommen.

Hierbei sind die erfindungsgemäß einsetzbaren Polyetherole vorzugsweise solche der Formel (I)

A[-O-(CH₂-CHR'-O-)ₘ-(CH₂-CH₂-O-)ₙ--(CH₂-CH(CH₃)-O-)ₒ-Z]ₐ (I)

mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z entweder Wasserstoff, ein linearer oder verzweigter, gesättigter oder ungesättigter Kohlenwasserstoffrest mit 1-18 C-Atomen, bevorzugt eine Methyl-, Ethyl-, Propyl-, Butyl-, Vinyl- oder Allylgruppe ist, oder
der Rest einer organischen Säure der Formel -C(=O)-ZE, wobei ZE ein organischer Rest, bevorzugt ein linearer oder verzweigter, gesättigter oder olefinisch ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-ZC ist, wobei ZC ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist und mit der Maßgabe, dass mindestens A oder Z Wasserstoff repräsentieren.

Vorzugsweise werden Verbindungen der Formel (I) verwendet, die ausschließlich Wasserstoffatome, Sauerstoffatome und Kohlenstoffatome aufweisen.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung vorzugsweise Reste von Substanzen verstanden, die den Anfang der herzustellenden Verbindung der Formeln (I) bilden, die durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein- oder mehrwertiger Alkohol, oder deren beliebige Mischungen verwendet. Für den Fall, dass mehrere Startverbindungen A als Gemisch verwendet wurden, kann der Index a auch einer statistischen Verteilung unterliegen. Z kann darüber hinaus auch der Rest einer Startverbindung Z-OH sein.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Bevorzugt werden in dem erfindungsgemäßen Verfahren als Verbindungen der Formel (I) solche eingesetzt, die eine gewichtsmittlere Molmasse von 76 bis 10.000 g/mol, bevorzugt von 100 bis 8.000 g/mol und besonders bevorzugt von 200 bis 6.000 g/mol aufweisen.

Als Verbindungen der Formel (I) können bevorzugt solche Verbindungen eingesetzt werden, die aus einer Verbindung der Formel (II)

A[-OH]a (II)

hervorgegangen sind, wobei der Rest A sich aus Verbindungen ableitet ausgewählt aus der Gruppe der ein- oder mehrwertigen monomeren, oligomeren oder polymeren Alkohole, Phenole, Kohlenhydrate oder Kohlenhydratderivate, wobei besonders bevorzugt solche Verbindungen eingesetzt werden, bei denen sich der Rest A von einem oder mehreren Alkoholen aus der Gruppe von Butanol, 1-Hexenol, Octanol, Dodecanol, Stearylalkohol, Vinyloxybutanol, 2-Ethylhexanol, Cyclohexanol, Benzylalkohol, Ethylenglykol, Propylenglykol, Di-, Tri- oder Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Allylalkohol, Vinylalkohol oder von auf Naturstoffen basierenden, Hydroxylgruppen tragenden Verbindungen ableitet.

Besonders bevorzugt werden solche Verbindungen eingesetzt, die bei einem Druck von 101325 Pa und einer Temperatur von 23 °C flüssig vorliegen. Unter diesen sind Butyldiglykol, Dipropylenglykol und Propylenglykol ganz besonders bevorzugt.

Erfindungsgemäß als Polyetherole einsetzbare Verbindungen der Formel (I) und Verfahren zu deren Herstellung werden z. B. in EP 0075703, US 3775452 und EP 1031603 beschrieben. Geeignete Verfahren bedienen sich z.B. basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxyfunktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Die Verbindungen der Formeln (II) können auch durch Doppelmetallcyanid-Katalyse hergestellt werden. Durch Doppelmetallcyanid-Katalyse hergestellte Polyether haben in der Regel einen besonders niedrigen Gehalt an ungesättigten Endgruppen von kleiner oder gleich 0,02 Milliäquivalenten pro Gramm Polyether-Verbindung (meq/g), bevorzugt kleiner oder gleich 0,015 meq/g, besonders bevorzugt kleiner oder gleich 0,01 meq/g (Bestimmungsmethode ASTM D2849-69), enthalten deutlich weniger Monole und haben in der Regel eine geringe Polydispersität von weniger als 1,5. Die Polydispersität (PD) kann nach einer dem Fachmann an sich bekannten Methode ermittelt werden, indem durch Gelpermeationschromatographie (GPC) sowohl das zahlenmittlere Molekulargewicht (Mn) wie auch das gewichtsmittlere Molekulargewicht (Mw) bestimmt werden. Die Polydispersität ergibt sich als PD = Mw/Mn. Die Herstellung derartiger Polyether wird z. B. in der US-A 5158922 und der EP-A 0654302 beschrieben.

Unabhängig vom Herstellungsweg sind Verbindungen der Formel (I) bevorzugt geeignet, die vorzugsweise eine Polydispersität Mw/Mn von 1,0 bis 1,5 aufweisen, bevorzugt mit einer Polydispersität von 1,0 bis 1,3.

Abhängig vom Alkylenoxid-Terminus können die erfindungsgemäß einzusetzenden Polyetherole eine primäre oder sekundäre OH-Funktion besitzen. Unter dem Aspekt der später erzielten hydrolytischen Beständigkeit der gewonnenen SiOC-verknüpften Polyethersiloxane ist im Rahmen der erfinderischen Lehre der Einsatz von solchen Polyetherolen bevorzugt, die eine sekundäre Alkoholfunktion aufweisen.

Der erfindungsgemäße Austausch der Acetoxygruppen durch Umsetzung mit Polyetherolen zu SiOC verknüpften Polyethersiloxanen kann in Gegenwart von Lösungsmitteln oder kann bevorzugt ohne Lösemittel durch innige Vermischung der Reaktanden unter Rühren bei Umsetzungstemperaturen von vorzugsweise 20°C bis 60°C erfolgen.

Das molare Verhältnis der Reaktanden wird dabei insbesondere so bemessen, dass man mindestens 1 Mol an Polyether gebundene OH-Funktionalität pro Mol Acetoxygruppe des verzweigten Siloxan einsetzt. Bevorzugt werden 1 bis 2 Mol an Polyether gebundene OH-Funktionalität, bevorzugt 1,1 bis 1,6 Mol an Polyether gebundene OH-Funktionalität, besonders bevorzugt 1,2 bis 1,4 Mol an Polyether gebundene OH-Funktionalität pro Mol Acetoxygruppe des verzweigten Siloxans eingesetzt.

Die in einer Vielzahl von grenzflächenaktiven Anwendungen eingesetzten SiOC-verknüpften, verzweigten Polyethersiloxane sind häufig davon geprägt, dass sie Polyetherreste unterschiedlicher Zusammensetzung und/ oder Molekulargewichts enthalten. Somit ist eine Ausgestaltungsmöglichkeit des erfindungsgemäßen Verfahrens das Acetoxygruppen enthaltende, äquilibrierte verzweigte Siloxan im 3. Schritt mit einer Mischung verschiedenartiger Polyetherole umzusetzen. Dem Fachmann vertraut ist das zum Teil unterschiedliche Reaktionsverhalten der eingesetzten Polyetherole, so dass man dem Ziel gewidmet eine besondere Grenzflächenaktivität hervorzurufen, einige orientierende Handversuche mit Polyetherol-Mischungen macht und diese so erhaltenen Produkte dann jeweils anwendungstechnisch bewertet, um ein optimales Ergebnis zu erzielen.

Der Austausch der Acetoxygruppen durch Umsetzung mit Polyetherolen erfolgt erfindungsgemäß vorzugsweise im Verlauf von 30 Minuten bis 3 Stunden.

Ein weiterer Gegenstand der Erfindung ist eine Zubereitung, hergestellt nach dem erfindungsgemäßen Verfahren wie zuvor beschrieben, enthaltend wenigstens einen SiOC-verknüpften, verzweigten Siliconpolyether, ein Polyetherol und einen mit einer Acetylgruppe endverschlossenen Polyether, mit der Maßgabe, dass der im Siliconpolyether enthaltene Polyetherrest chemisch identisch ist mit dem Polyetherrest des Polyetherols und mit dem Polyetherrest des mit einer Acetylgruppe endverschlossenen Polyetherols und dass der Anteil des SiOC-verknüpften, verzweigten Siliconpolyethers mindestens 50 Massenprozent bezogen auf die Gesamtzubereitung beträgt.

Ein weiterer Gegenstand der Erfindung ist die Verwendung dieser Zubereitung, hergestellt nach dem erfindungsgemäßen Verfahren wie zuvor beschrieben, als Entschäumer, als Schaumstabilisatoren, Netzmittel, Lack- und Verlaufsadditive sowie als Dismulgatoren.

Ein weiterer Gegenstand der Erfindung ist die Verwendung von im Siloxanteil verzweigten SiOC-verknüpften Polyethersiloxanen, hergestellt wie zuvor beschrieben, als Entschäumer, insbesondere als Dieselentschäumer; als Entlüfter; als Schaumstabilisator, insbesondere als Polyurethanschaumstabilisator; als Netzmittel; als Lack- und Verlaufsadditiv; als Dismulgator; als Hydrophobierungsmittel; als Verlaufsmittel; zur Herstellung von Polymerdispersionen; zur Herstellung von Klebstoffen oder Dichtstoffen; zur Oberflächenbehandlung von Fasern, Partikeln oder Flächengebilden, insbesondere zur Ausrüstung oder Imprägnierung von Textilien, zur Herstellung von Papiertüchern, bei der Beschichtung von Füllstoffen; zur Herstellung von Reinigungs- und Pflegeformulierungen für den Haushalt oder für industrielle Anwendungen, insbesondere zur Herstellung von Weichspülmitteln; zur Herstellung von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; zur Reinigung und Pflege von harten Oberflächen; als Prozesshilfsmittel bei der Extrusion von Thermoplasten; zur Herstellung von thermoplastischen Formkörpern und/oder als Adjuvant im Pflanzenschutz; zur Herstellung von Baustoffzusammensetzungen.

### Beispiele

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.
Die in den Beispielen eingesetzten DT-Zyklen werden nach den Verfahren der noch nicht offengelegten europäischen Patentanmeldung EP 17195510.7, EP 17169876.4 bzw. der europäischen Patentanmeldung EP 3 321 304 A1 hergestellt.

Die Gaschromatogramme werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcyclengehalt definiert als die Summe der D₄-, D₅-, D₆-Gehalte bezogen auf die Siloxanmatrix und festgestellt nach der Derivatisierung der α,ω-Diacetoxypotydimethytsitoxane zu den entsprechenden α,ω-Diisopropoxypolydimethylsiloxanen herangezogen. Die Derivatisierung zu den α,ω-Diisopropoxypolydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die eingesetzten Polyetherole besitzen Wassergehalte von ca. 0,2 Massen-% und werden ohne weitere Vortrocknung verwendet. Eingesetztes Toluol besitzt einen Wassergehalt von 0,03 Massen-% und wird ebenfalls ohne Vortrocknung verwendet.

Zur Absicherung der insbesondere produktionslogistisch wichtigen Lagerstabilität werden die erfindungsgemäß hergestellten, verzweigten Acetoxysiloxane falls in den jeweiligen Synthesebeispielen nicht explizit anders beschrieben, zunächst bei 23°C Lagertemperatur über einen Zeitraum von 3 Wochen in Glasflaschen gelagert, bevor sie mit den Polyetherolen zu den entsprechenden SiOC-verknüpften, verzweigten Siloxan-Polyoxyalkylen-Blockcopolymeren beziehungsweise zu den entsprechenden verzweigten Isopropoxysiloxanen umgesetzt werden.

### Beispiel 1

### Herstellung eines zyklisch-verzweigten Siloxans mit einem angestrebten D-/ T-Verhältnis von 6 : 1

In einem 10-l-Vierhalsrundkolben mit KPG-Rührer und aufgesetztem Rückflusskühler werden 783 g (4,39 mol) Methyltriethoxysilan zusammen mit 978,7 g (2,64 mol) Dekamethylcyclopentasiloxan unter Rühren auf 60°C erwärmt, mit 2,98 g Trifluormethansulfonsäure beaufschlagt und für 4 Stunden äquilibriert. Dann werden 237 g Wasser sowie 59,3 g Ethanol hinzugefügt und der Ansatz wird für weitere 2 Stunden auf Rückflusstemperatur erhitzt. Man fügt 159,0 g Wasser sowie 978,8 g (2,64 mol) Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. Man fügt dann dem Reaktionsansatz 3000 ml Toluol hinzu und destilliert bis zu einer Sumpftemperatur von 100°C am Wasserabscheider das noch im Stoffsystem befindliche Wasser ab. Man lässt den Reaktionsansatz auf etwa 60°C abkühlen, neutralisiert die Säure durch Zugabe von 60,0 g festen Natriumhydrogencarbonats und rührt dann zur vollständigen Neutralisation noch weitere 30 Minuten nach. Nach Abkühlen auf 25°C werden mit Hilfe eines Faltenfilters die Salze abgetrennt.

Bei 70°C und einem angelegten Hilfsvakuum von < 1mbar wird das als Lösungsmittel eingesetzte Toluol abdestilliert. Der Destillationssumpf ist eine farblose, leichtbewegliche Flüssigkeit deren ²⁹Si-NMR-Spektrum ein D-/T-Verhältnis von 5,2 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen ein Anteil von 0,43 Molprozent zu. Die gaschromatographische Analyse der Flüssigkeit weist außerdem einen Anteil von ca. 15 Gewichtsprozent an einfachen Siloxancyclen in Form von D₄, D₅ und D₆ nach. Das GPC weist eine breite Molmassenverteilung auf, gekennzeichnet durch Mw = 55258 g/ mol; Mn 1693 g/ mol und Mw/ Mn = 32,63.

### Beispiel 2 (erfindungsgemäße Schritte 1 und 2)

### Herstellung eines Acetoxy-terminierten, verzweigten Siloxans

In einem 500-ml-Vierhalskolben mit KPG-Rührer, Innenthermometer und aufgesetztem Rückflusskühler werden 22,8 g (0,223 mol) Essigsäureanhydrid zusammen mit 101,2 g der in Beispiel 1 hergestellten DT-Zyklen (D/ T-Verhältnis nach ²⁹Si-NMR-Spektrum = 5,2 : 1, M = 452,8 g/ mol und einem Anteil von SiOH/ SiOEt-Gruppierungen von 0,43 Mol-%) und 125,9 g Dekamethylcyclopentasiloxan (D₅) unter Rühren vorgelegt und mit 0,25 g (0,15 ml) Trifluormethansulfonsäure (0,1 Massen-% bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 80% bezogen auf eingesetztes Essigsäureanhydrid sowie das vollständige Verschwinden spektroskopisch erfassbarer Anteile an Si-Alkoxy- und SiOH- Gruppen belegt. Etwa 0,7 ml der Flüssigkeit werden mit Hilfe einer Pipette auf einen schwarzen Bakelitdeckel aufgetragen. In weniger als 1 Minute bildet sich ein festes, weißes Gel ohne flüssige Anteile, dessen Präsenz sich gut vor dem Hintergrund des schwarzen Bakelitdeckels abhebt und die vollständige Äquilibrierung des Acetoxysiloxans belegt.

### Beispiel 3 (erfindungsgemäßer Schritt 3)

### Herstellung eines verzweigten, SiOC-verknüpften Polyethersiloxans in Toluol mit später Neutralisation

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) in 200 ml Toluol unter Rühren vorgelegt und mit 20 g des in Beispiel 2 hergestellten, verzweigten trifluormethansulfonsauren Acetoxysiloxans versetzt. Dann wird die Reaktionsmischung für 1 Stunde unter fortwährendem Rühren auf 40°C erwärmt. Der Rückflusskühler wird dann durch eine Destillationsbrücke mit Destillatvorlage ersetzt und unter Anlegen eines Hilfsvakuums wird der Ansatz bei 70°C von Toluol und Essigsäure destillativ befreit.

Nach Erkalten wird der Destillationssumpf mit 1,9 g Natriumhydrogencarbonat versetzt und man lässt das Salz ca. 30 Minuten einrühren. Dann werden die Salze mit Hilfe einer Filterpresse über eine Seitz K 300 Filterscheibe abgetrennt.

Erhalten wird ein dunkel-gelbliches, SiOC-verknüpftes verzweigtes Polyethersiloxan, dessen ²⁹Si-NMR-Spektrum die angestrebte Struktur absichert. Ein ergänzendes ¹³C-NMR-Spektrum zeigt, dass etwa 8 Molprozent des im Überschuss eingesetzten Polyetherols in acetylierter Form vorliegen.

### Beispiel 4 (erfindungsgemäßer Schritt 3)

### Lösemittelfreie Herstellung eines verzweigten, SiOC-verknüpften Polyethersiloxans mit früher Neutralisation

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) unter Rühren vorgelegt, mit 0,4 g Natriumhydrogencarbonat versetzt und dann lässt man das Salz ca. 30 Minuten einrühren. 20 g des in Beispiel 2 hergestellten, verzweigten trifluormethansulfonsauren Acetoxysiloxans werden hinzugegeben und der Ansatz wird für 1 Stunde unter Rühren auf 50°C erwärmt.

Dann wird der Rückflusskühler durch eine Destillationsbrücke mit Vorlage ersetzt und unter Anlegen eines Hilfsvakuums von ≤ 1 mbar (Ölpumpe) wird bei einer Sumpftemperatur von 100°C im Laufe von 3 Stunden Essigsäure abdestilliert. Nach Abkühlen auf 25°C wird der Destillationssumpf mit 1,9 g NaHCO₃ versetzt. Man lässt das Hydrogencarbonat 30 Minuten einrühren und trennt dann die Salze mit Hilfe einer Filterpresse über eine Seitz K 300 Filterscheibe ab.

Erhalten wird eine hell-gelblich-klare, leichtbewegliche Flüssigkeit, deren zugehöriges ²⁹Si-NMR-Spektrum die Struktur des angestrebten, verzweigten, SiOC-verknüpften Polyethersiloxans belegt. Ein ergänzendes ¹³C-NMR-Spektrum zeigt, dass keinerlei Anteile des Polyetherols in acetylierter Form vorliegen

### Beispiel 5 (erfindungsgemäß) (Schritt 3)

### Herstellung eines verzweigten, SiOC-verknüpften Polyethersiloxans in Toluol mit früher Neutralisation

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) in 200 ml Toluol unter Rühren vorgelegt und mit 20 g des in Beispiel 2 hergestellten, verzweigten trifluormethansulfonsauren Acetoxysiloxans versetzt.

Die Reaktionsmischung wird für 30 Minuten unter fortwährendem Rühren auf 50°C erwärmt. Dann wird im Verlauf von weiteren 30 Minuten zunächst die zur Neutralisation benötigte Menge an gasförmigem Ammoniak in die Reaktionsmatrix eingeleitet. Im Verlauf weiterer 45 Minuten leitet man noch einen leichten Ammoniakstrom ein, so dass das Reaktionsgemisch deutlich alkalische Reaktion zeigt (feuchtes Indikatorpapier).

Die ausgefallenen Salze werden über einen Doppelfaltenfilter von der toluolischen Phase abgetrennt.

Am Rotationsverdampfer bei 70°C Sumpftemperatur und einem angelegten Hilfsvakuum von 1 mbar wird das Rohprodukt destillativ von Toluol befreit.

Man isoliert die nahezu farblose Zubereitung eines SIOC-verknüpften verzweigten Polyethersiloxans, dessen angestrebte Struktur durch ein ²⁹Si-NMR-Spektrum abgesichert wird. Begleitende ¹³C-NMR- und ¹H-NMR-Spektroskopie belegen ferner, dass keinerlei Anteile Acetyl-endverschlossenen Polyetherols vorhanden sind.

### Beispiel 6

### Herstellung eines zyklisch-verzweigten Siloxans mit einem angestrebten D-/ T-Verhältnis von 6 : 1

In einem 500-ml-Vierhalsrundkolben mit KPG-Rührer und aufgesetztem Rückflusskühler werden 52,2 g (0,293mol) Methyltriethoxysilan zusammen mit 130,3 g (0,351 mol) Dekamethylcyclopentasiloxan unter Rühren auf 60°C erwärmt, mit 0,400 g Trifluormethansulfonsäure beaufschlagt und für 4 Stunden äquilibriert. Dann werden 15,8 g Wasser sowie 4,0 g Ethanol hinzugefügt und der Ansatz wird für weitere 4 Stunden auf Rückflusstemperatur (ca. 80°C) erhitzt. Man fügt 10,6 g Wasser sowie 200 ml Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. Man belässt den Reaktionsansatz für weitere 2 Stunden bei 90°C, lässt dann auf 50°C abkühlen und fügt 5 ml einer 25%igen, wässrigen Ammoniaklösung hinzu und rührt zur vollständigen Neutralisation noch eine weitere Stunde nach.

Bei 100°C und einem angelegten Hilfsvakuum von < 1mbar werden Wasser und das als Lösungsmittel eingesetzte Dekamethylcyclopentasiloxan (D₅) abdestilliert. Nach Erkalten des Destillationssumpfes wird mit Hilfe eines Faltenfilters das ausgefallene Ammoniumtriflat abgetrennt. Das Filtrat ist eine farblose, leichtbewegliche Flüssigkeit deren ²⁹Si-NMR-Spektrum ein D-/T-Verhältnis von 6,44 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen tragen, ein Anteil von 4,0 Molprozent zu.

### Beispiel 7 (erfindungsgemäße Schritte 1 und 2)

### Herstellung eines Acetoxy-terminierten, verzweigten Siloxans

In einem 500-ml-Vierhalskolben mit KPG-Rührer, Innenthermometer und aufgesetztem Rückflusskühler werden 22,8 g (0,223 mol) Essigsäureanhydrid zusammen mit 121,8 g der in Beispiel 5 hergestellten DT-Zyklen (D/ T-Verhältnis nach ²⁹Si-NMR-Spektrum = 6,44 : 1, M = 544,71 g/ mol und einem Anteil von SiOH/ SiOEt-Gruppierungen von 4,0 Mol-%) und 106,5 g Dekamethylcyclopentasiloxan (D₅) unter Rühren vorgelegt und mit 0,25 g (0,15 ml) Trifluormethansulfonsäure (0,1 Massen-% bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 80 % bezogen auf eingesetztes Essigsäureanhydrid sowie das vollständige Verschwinden spektroskopisch erfassbarer Anteile an Si-Alkoxy- und SiOH- Gruppen belegt. Etwa 0,7 ml der Flüssigkeit werden mit Hilfe einer Pipette auf einen schwarzen Bakelitdeckel aufgetragen. In weniger als 1 Minute bildet sich ein festes, weißes Gel ohne flüssige Anteile, das sich gut vor dem Hintergrund des Deckels abhebt und die vollständige Äquilibrierung des Acetoxysiloxans belegt.

### Beispiel 8 (erfindungsgemäßer Schritt 3)

### Lösemittelfreie Herstellung eines verzweigten, SiOC-verknüpften Polyethersiloxans mit früher Neutralisation

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) unter Rühren vorgelegt, mit 0,4 g Triisopropanolamin versetzt und dann lässt man das Amin ca. 30 Minuten einrühren. 20 g des in Beispiel 7 hergestellten, verzweigten trifluormethansulfonsauren Acetoxysiloxans werden hinzugegeben und der Ansatz wird für 1 Stunde unter Rühren auf 50°C erwärmt.

Dann wird der Rückflusskühler durch eine Destillationsbrücke mit Vorlage ersetzt und unter Anlegen eines Hilfsvakuums von ≤ 1 mbar (Ölpumpe) wird bei einer Sumpftemperatur von 100°C im Laufe von 3 Stunden Essigsäure abdestilliert. Nach Abkühlen auf 25°C wird der Destillationssumpf mit 1,9 g NaHCO₃ versetzt. Man lässt das Hydrogencarbonat 30 Minuten einrühren und trennt dann die Salze mit Hilfe einer Filterpresse über eine Seitz K 300 Filterscheibe ab.

Erhalten wird eine hell-gelblich-klare, leichtbewegliche Flüssigkeit, deren zugehöriges ²⁹Si-NMR-Spektrum die Struktur des angestrebten, verzweigten, SiOC-verknüpften Polyethersiloxans belegt. Ein ergänzendes ¹³C-NMR-Spektrum zeigt, dass keinerlei Anteile des Polyetherols in acetylierter Form vorliegen.

### Beispiel 9 (bevorzugter erfindungsgemäßer Schritt 2)

### Herstellung eines Acetoxy-terminierten, verzweigten Siloxans

In einem 1000-ml-Vierhalskolben mit KPG-Rührer, Innenthermometer und aufgesetztem Rückflusskühler werden 49,9 g (0,489 mol) Essigsäureanhydrid zusammen mit 268,1 g von entsprechend Beispiel 1 hergestellter DT-Zyklen (D/ T-Verhältnis nach ²⁹Si-NMR-Spektrum = 6,18 : 1, M = 525,42 g/ mol und einem Anteil von SiOH/ SiOEt-Gruppierungen von 0,52 Mol-%) und 188,5 g Dekamethylcyclopentasiloxan (D₅) unter Rühren vorgelegt und mit 1,03 g (0,56 ml) Trifluormethansulfonsäure (0,2 Massen-% bezogen auf den Gesamtansatz) und 7,6 g Essigsäure (1,5% bezogen auf die Masse der Reaktanden) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 88,2 % bezogen auf eingesetztes Essigsäureanhydrid sowie das vollständige Verschwinden spektroskopisch erfassbarer Anteile an Si-Alkoxy- und SiOH- Gruppen belegt.

### Überführung des verzweigten Acetoxylsiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans in einem 250-ml-Vierhalsrundkolben ausgerüstet mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.
Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 2,3 % | 1,4 % | 0,4 % | 4,1 % | 7,1 % |

Unter Berücksichtigung des Isopropanolüberschusses sind hierbei die Gehalte an Siloxancyclen (D₄, D₅ und D₆) allein bezogen auf den Siloxananteil berechnet.

## Patentansprüche

1. Verfahren zur Herstellung von im Siloxanteil verzweigten, SiOC-verknüpften Polyethersiloxanen ausgehend von zyklischen-verzweigten Siloxanen vom D/T-Typ, **dadurch gekennzeichnet, dass** man
in einem ersten Schritt zyklische-verzweigte Siloxane vom D/T-Typ säurekatalysiert mit Acetanhydrid gegebenenfalls in Abmischung mit einfachen Siloxanzyklen und/oder Hydroxygruppen tragenden Siloxanen und/oder Acetoxy- und/oder Alkoxygruppen-tragenden Silanen und/oder Siloxanen zu Acetoxygruppen-tragenden, verzweigten Siloxanen umsetzt und in einem zweiten Schritt die Äquilibrierung des Acetoxy-modifizierten verzweigten Siloxans mit Säuren, vorzugsweise Supersäuren, insbesondere unter Zusatz von Essigsäure durchführt und
in einem dritten Schritt das saure, vorzugsweise supersaure Acetoxysiloxan gegebenenfalls in Gegenwart von Basen und gegebenenfalls in Gegenwart eines inerten Lösungsmittels mit Polyetherolen umsetzt,
wobei es sich bei den zyklischen-verzweigten Siloxanen vom D/T-Typ um Mischungen zyklischer-verzweigter Siloxane vom D/T-Typ handelt, die neben D- und T-Einheiten aufweisenden Siloxanen ggf. auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massenprozent-%, bevorzugt ≤ 5 Massen-% bis ≥ 0 Massenprozent-%, bezogen auf die Gesamtheit aller Si-Atome ausmacht,
mit der Maßgabe, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 eingesetzte Säure(n) nicht allein Trifluormethansulfonsäure oder nicht allein Trifluormethansulfonsäure und Essigsäure sind.

2. Verfahren nach Anspruch 1, **dadurch gekennzeichnet, dass** die in Schritt 1 und/oder 2 eingesetzten Säuren Supersäuren sind, die einen pKa-Wert kleiner -3,0 aufweisen, vorzugsweise fluorierte und/ oder perfluorierte Sulfonsäuren, Fluorsulfonsäure HSO₃F, Fluor-Antimonsäure HSbF₆, Perfluorbutansulfonsäure C₄F₉SO₃H und ganz besonders bevorzugt Trifluormethansulfonsäure CF₃SO₃H umfasst.

3. Verfahren nach Anspruch 1 oder 2, **dadurch gekennzeichnet, dass** als Acetoxygruppen tragende Silane Diacetoxydimethylsilan und/ oder Triacetoxymethylsilan eingesetzt werden.

4. Verfahren nach Anspruch 1 bis 3, **dadurch gekennzeichnet, dass** als Alkoxygruppen tragende Silane, Triethoxy- und/ oder Trimethoxy- und/ oder Diethoxy- und/ oder Triethoxysilan eingesetzt werden.

5. Verfahren nach Anspruch 1 bis 4, wobei die Mischungen zyklischer-verzweigter Siloxane vom D/T-Typ D- und T-Einheiten aufweisende Siloxanen umfassen, mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und dass sie des Weiteren zumindest 5 Gew.-% Siloxancyclen, wie vorzugsweise Oktamethylcyclotetrasiloxan (D4), Dekamethylcyclopentasiloxan (D₅) und/oder deren Mischungen enthalten,
oder,
wobei die Mischungen zyklischer-verzweigter Siloxane vom D/T-Typ D- und T-Einheiten aufweisende Siloxanen umfassen mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, größer 2 Molprozent und kleiner 10 Molprozent ist.

6. Verfahren nach einem der Ansprüche 1 bis 5, wobei die im Acetylierungsschritt gegebenenfalls noch hinzugefügten, einfachen Siloxanzyklen insbesondere Oktamethylcyclotetrasiloxan, Dekamethylcyclopentasiloxan, Dodekamethylcyclohexasiloxan und/ oder deren beliebig zusammengesetzte Abmischungen umfassen.

7. Verfahren nach zumindest einem der Ansprüche 1 bis 6, **dadurch gekennzeichnet, dass** man Essigsäure in Mengen von 0,4 bis 3 Gewichtsprozent, vorzugsweise 0,5 bis 1,8 Gewichtsprozent, bevorzugt 0,8 bis 1,6 Gewichtsprozent, besonders bevorzugt in Mengen von 1,0 bis 1,5 Gewichtsprozent bezogen auf die Reaktionsmatrix, insbesondere bestehend aus Acetanhydrid, zyklisch-verzweigten Siloxane vom D/T-Typ und gegebenenfalls einfachen Siloxanzyklen, hinzusetzt.

8. Verfahren nach Anspruch 1 bis 7, wobei der Austausch der Siloxan gebundenen Acetoxygruppen mindestens in Gegenwart einer Base, insbesondere in Gegenwart von Natriumhydrogencarbonat, Ammoniak oder eines organischen Amins erfolgt.

9. Verfahren nach Anspruch 1 bis 8, wobei der Austausch der Siloxan gebundenen Acetoxygruppen durch die Umsetzung mit Polyetherolen unter Verwendung eines inerten Lösungsmittels, bevorzugt unter Verwendung eines inerten und zugleich mit entstehender und gegebenenfalls bereits vorhandener Essigsäure Azeotrop bildenden Lösungsmittels erfolgt,
wobei das inerte Lösungsmittel vorteilhafterweise ein aromatisches, bevorzugt alkylaromatisches Lösungsmittel und ganz besonders bevorzugt Toluol ist.

10. Verfahren nach Anspruch 1 bis 8, wobei der Austausch der Siloxan gebundenen Acetoxygruppen durch die Umsetzung mit Polyetherolen lösemittelfrei erfolgt.

11. Verfahren nach Anspruch 1 bis 10, wobei Lewis-Supersäuren, wasserfreies Eisen(III)chlorid, säurebehandelte Bleicherden, konzentrierte Schwefelsäure oder besonders bevorzugt Supersäure, insbesondere Trifluormethansulfonsäure, und ganz besonders bevorzugt Trifluormethansulfonsäure in Gegenwart von Essigsäure als Katalysator im Acetylierungsschritt eingesetzt werden.

12. Verfahren nach einem der Ansprüche 1 bis 11, ausgenommen den alleinigen Einsatz von Trifluormethansulfonsäure sowie den alleinigen Einsatz von Trifluormethansulfonsäure und Essigsäure als Säure(n) für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten.

13. Verfahren nach Anspruch 1 bis 12, wobei als Polyetherole vorzugsweise solche der Formel (I)
A[-O-(CH₂-CHR'-O-)ₘ-(CH₂-CH₂-O-)ₙ-(CH₂-CH(CH₃)-O-)ₒ-Z]ₐ (I)
mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z entweder Wasserstoff, ein linearer oder verzweigter, gesättigter oder ungesättigter Kohlenwasserstoffrest mit 1-18 C-Atomen, bevorzugt eine Methyl-, Ethyl-, Propyl-, Butyl-, Vinyl- oder Allylgruppe ist, oder
der Rest einer organischen Säure der Formel -C(=O)-ZE, wobei ZE ein organischer Rest, bevorzugt ein linearer oder verzweigter, gesättigter oder olefinisch ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-ZC ist, wobei ZC ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist und mit der Maßgabe, dass mindestens A oder Z Wasserstoff repräsentieren,
eingesetzt werden.

14. Verfahren nach Anspruch 1 bis 13, wobei man mindestens 1 Mol an Polyether gebundene OH-Funktionalität pro Mol Acetoxygruppe des verzweigten Siloxans, bevorzugt 1 bis 2 Mol an Polyether gebundene OH-Funktionalität, bevorzugt 1,1 bis 1,6 Mol an Polyether gebundene OH-Funktionalität, besonders bevorzugt 1,2 bis 1,4 Mol an Polyether gebundene OH-Funktionalität pro Mol Acetoxygruppe des verzweigten Siloxans einsetzt.

15. Zubereitung, hergestellt nach einem Verfahren der Ansprüche 1 bis 14, enthaltend wenigstens einen SiOC-verknüpften, verzweigten Siliconpolyether, ein Polyetherol und einen mit einer Acetylgruppe endverschlossenen Polyether, mit der Maßgabe, dass der im Siliconpolyether enthaltene Polyetherrest chemisch identisch ist mit dem Polyetherrest des Polyetherols und mit dem Polyetherrest des mit einer Acetylgruppe endverschlossenen Polyethers und dass der Anteil des SiOC-verknüpften, verzweigten Siliconpolyethers mindestens 50 Massenprozent bezogen auf die Gesamtzubereitung beträgt.

16. Verwendung der Zubereitung nach Anspruch 15 als Entschäumer, als Schaumstabilisator, Netzmittel, Lack- und Verlaufsadditiv oder als Dismulgator.

17. Verwendung von im Siloxanteil verzweigten SiOC-verknüpften Polyethersiloxanen, hergestellt nach einem der Ansprüche 1 bis 14, als Entschäumer, insbesondere als Dieselentschäumer; als Entlüfter; als Schaumstabilisator, insbesondere als Polyurethanschaumstabilisator; als Netzmittel; als Lack- und Verlaufsadditiv; als Dismulgator; als Hydrophobierungsmittel; als Verlaufsmittel; zur Herstellung von Polymerdispersionen; zur Herstellung von Klebstoffen oder Dichtstoffen; zur Oberflächenbehandlung von Fasern, Partikeln oder Flächengebilden, insbesondere zur Ausrüstung oder Imprägnierung von Textilien, zur Herstellung von Papiertüchern, bei der Beschichtung von Füllstoffen; zur Herstellung von Reinigungs- und Pflegeformulierungen für den Haushalt oder für industrielle Anwendungen, insbesondere zur Herstellung von Weichspülmitteln; zur Herstellung von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; zur Reinigung und Pflege von harten Oberflächen; als Prozesshilfsmittel bei der Extrusion von Thermoplasten; zur Herstellung von thermoplastischen Formkörpern und/oder als Adjuvant im Pflanzenschutz; zur Herstellung von Baustoffzusammensetzungen.
